Europäisches Patentamt

European Patent Office

Office européen des brevets

(11) Veröffentlichungsnummer: **0 498 236 A2**

# EUROPÄISCHE PATENTANMELDUNG

(21) Anmeldenummer: **92101165.6**

(51) Int. Cl.5: **H01S 3/083**

(22) Anmeldetag: **24.01.92**

(30) Priorität: **08.02.91 DE 4103789**

(43) Veröffentlichungstag der Anmeldung:
**12.08.92 Patentblatt 92/33**

(84) Benannte Vertragsstaaten:
**CH DE FR GB IT LI NL**

(71) Anmelder: **Firma Carl Zeiss**

**W-7920 Heidenheim (Brenz)(DE)**
(84) **CH DE FR IT LI NL**

(71) Anmelder: **CARL ZEISS-STIFTUNG HANDELND ALS CARL ZEISS**

**W-7920 Heidenheim (Brenz)(DE)**
(84) **GB**

(72) Erfinder: **Gütter, Arnold, Dr.**
**Holunderweg 6**
**W-7923 Königsbronn(DE)**
Erfinder: **Herrmann, Jobst, Dr.**
**Steinhalde 10**
**W-7080 Aalen 15(DE)**
Erfinder: **Simon, Karl-H., Dr.**
**Am Espenrain 5**
**W-7082 Oberkochen(DE)**

(54) **Verfahren zur Herstellung von Laserkreisel-Resonatorblöcken.**

(57) Für Laserkreisel-Resonatorblöcke wird ein Herstellungsverfahren nach dem Sandwich-Prinzip angegeben. Es beruht darauf, daß in zwei Platten von vielfacher Ausdehnung eines Resonatorblocks jeweils die sich gegenseitig ergänzenden Kanal- und Hohlraumstrukturen einer Vielzahl von Resonatorblöcken eingearbeitet werden, daß die so bearbeiteten Platten übereinandergelegt, entsprechend der Strukturen positioniert, miteinander verbunden und anschließend in einzelne Resonatorblöcke separiert werden.

Fig. 4 e

Die Erfindung betrifft ein Verfahren zur Herstellung von aus Teilkörpern zusammengesetzten Laserkreisel-Resonatorblöcken. Laserkreisei sind optische Drehratensensoren, bei denen zwei gegenläufig in einem geschlossen Kreislauf rotierende Laserstrahlen zur Messung von Winkelgeschwindigkeiten benutzt werden, wobei der Weg des Laserlichtes in den Laserblock als mehrteiliger Kanal von mehreckigem, vorzugsweise dreieckigem Grundriß mit in den Ecken angeordneten Resonatorspiegeln so in die Oberflächen der Teilkörper eingeformt ist, daß die Teilkanäle entlang ihrer Längsachse geteilt sind und sich beim Verbinden der Teilkörper zu geschlossenen Tunnels ergänzen.

Laserkreisel werden als Winkelgeschwindigkeitsmesser in Navigationssystemen verwendet. Sie beruhen auf der Messung einer Drehbewegung durch Vergleich der Oszillationsfrequenzen zweier in einem Ringlaser in einer geschlossenen Schleife gegenläufig umlaufender monochromatischer Lichtstrahlen. Die Differenz der Frequenz des Lichtstrahles, der in der Rotationsrichtung der Schleife rotiert zur Frequenz des Lichtstrahles, der gegen die Rotationsrichtung der Schleife rotiert, ist der zu messenden Winkelgeschwindigkeit proportional.

Zum Führen des Laserlichtes in einer geschlossenen Schleife dient ein Resonatorblock aus geeignetem Material, in dem die Kanäle für den von Spiegeln beherrschten Weg des Laserlichtes sowie Ausnehmungen zum Einsetzen von Elektroden für die Laserfunktion und weiterer Hilfsmittel eingeformt sind. Die geschlossene Schleife des Lichtkanals ist in bekannten Vorrichtungen als Vieleck, vorzugsweise als Dreieck ausgebildet, das im folgenden Strahlendreieck genannt wird.

In der EP 0251128 A2 ist ein Verfahren zur Herstellung einer Vielzahl von Ringlaserkreisel-Resonatorblöcken aus einem strangartig geformten Ausgangsmaterial beschrieben. Im strangartig geformten Ausgangsmaterial sind Bohrungen für die Strahldreiecke, die Elektrodenaufnahmen und anderer Hilfsmittel eingebracht. Die einzelnen Resonatorblöcke werden durch Abtrennen entsprechender Scheiben vom Strang gewonnen.

Das Einbringen von Bohrungen in den Materialstrang ist jedoch wegen der Begrenztheit der Zugänglichkeit nicht in der gewünschten Präzision möglich und auch unter wirtschaftlichen Aspekten nicht befriedigend.

In der DE 40 09 728 A1 ist ein Verfahren zum Herstellen eines Resonatorblocks (Grundkörper) für einen Laserkreisel beschrieben, das darauf beruht, in zwei Teilkörper, von denen jeder eine Trennfläche aufweist, Kanäle einzulassen, die entlang ihrer Längsachse geteilt sind und dann die fertigen Teilkörper an ihren Trennflächen miteinander zu verbinden. Für die Herstellung großer Stückzahlen ist dieses Verfahren nicht prädestiniert.

Die Erfindung hat sich die Aufgabe gestellt, ein Verfahren zur Herstellung von Laserkreisel-Resonatorblöcken anzugeben, das eine gute Nutzung des Resonatorblockvolumens und eine kostengünstige Massenproduktion gewährleistet.

Sie löst diese Aufgabe entsprechend den Merkmalen des Patentanspruches. Vorteilhafte Maßnahmen zur Durchführung der Erfindung sind in den Unteransprüchen aufgeführt.

Die Ausnehmungen für die Kanäle und Hilfsmittel können symmetrisch oder unsymmetrisch zu ihrer Längsachse in die beiden Platten eingeformt werden und zwar mittels Schleif- und Fräswerkzeugen oder mittels Pressung in einem formbaren Zustand des-Resonatorblockmaterials.

Die Ausführung des erfindungsgemäßen Verfahrens soll anhand von Zeichnungen näher erläutert werden.

Im einzelnen zeigen

Fig. 1      eine Schnittdarstellung eines Ausführungsbeispiels eines Laserkreisel-Resonatorblockes;

Fig.2a-2b      einen Ausschnitt aus einem aus zwei Teilkörpern hergestellten Laserkreisel-Resonatorblock in unsymmetrischer Einformung der Entladungskanäle in die Teilkörper im Längsschnitt;

Fig.3a-3b      einen Ausschnitt aus einem aus zwei Teilkörpern hergestellten Laserkreisel-Resonatorblock mit symmetrischer Einformung der Entladungskanäle in die Teilkörper im Längsschnitt;

Fig.4a-4d      die verschiedenen Herstellungsstufen eines Arrays von Ringlaser-Resonatorblöcken nach dem erfindungsgemäßen Herstellungsverfahren;

Fig.5a-5d      einen Ausschnitt aus einem aus drei Teilkörpern hergestellten Laserkreisel-Resonatorblock;

Fig.6a-6b      einen Ausschnitt aus einem weiteren Beispiel für einen aus drei Teilkörpern hergestellten Laserkreisel-Resonatorblock.

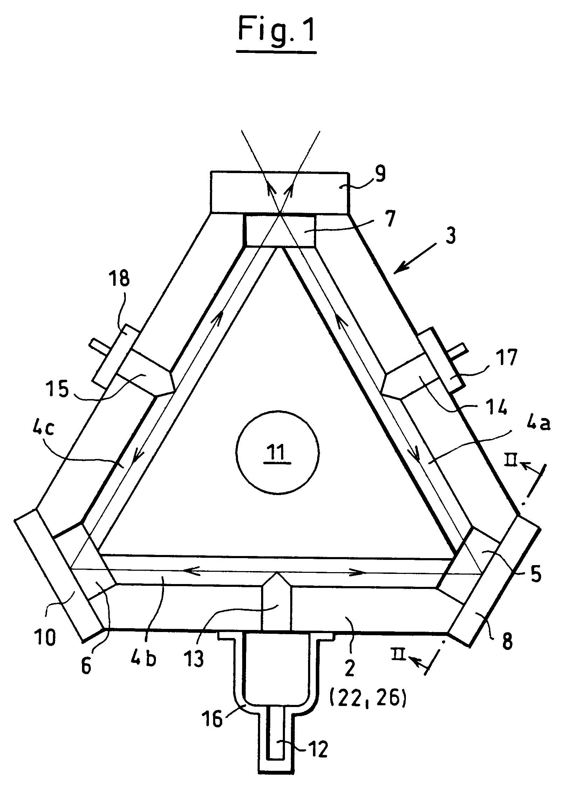

In der Darstellung der Fig. 1 ist mit dem Bezugszeichen (3) ein Laserkreisel-Resonatorblock aus geeignetem Material, beispielsweise Zerodur bezeichnet, in den ein Strahlendreieck angeordnet ist, dessen Seiten (4a, 4b, 4c) als Tunnel für den Laserweg in das Blockmaterial eingeformt sind. Die Enden der Seiten (4a, 4b, 4c) treffen sich entlang ihren einander kreuzenden Mitten nahe den Ecken des dreieckigen Laserkreisel-Resonatorblocks (3) (im folgenden abgekürzt Block (3) genannt), so daß sie ein dreieckiges Kanalsystem innerhalb des Blockes bilden. Dort, wo sich die Seiten (4a, 4b, 4c) schneiden, sind in diesem Beispiel zylindrische Ausnehmungen (5, 6, 7) ein kurzes Stück in den Block eingearbeitet, die ein Gasreservoir aufnehmen können. An den Schnittstellen des Tunnels (4a) mit dem Tunnel (4b) ist von dem Block (3) die Seitenfläche im rechten Winkel zum Strahldreieck abgearbeitet, an der man einen Spiegel (8) mittels Ansprengen oder einer anderen zweckmäßigen Verbindungstechnik an die abgearbeitete Fläche befestigen kann, der das Licht aus dem Tunnel (4a) in den Tunnel (4b) wirft und vom Tunnel (4b) in den Tunnel (4a). Der Spiegel (8) hat einen dielektrischen Belag, der so ausgelegt ist, daß er die gewünschte Lichtfrequenz vollkommen reflektiert. Ähnlich sind an den Block (3) an den Schnittstellen des Tunnels (4a) mit dem Tunnel (4c) und an den Schnittstellen der Tunnels (4c und 4b) Spiegel (9 und 10) befestigt. Zu der Kathode (16) und den Anoden (17) und (18) führenden Kanäle sind mit (13, 14) und (15) bezeichnet. Zwischen der Kathode und den beiden Anoden brennen im Betrieb zwei Gasentladungen, die die für den Laserprozeß innerhalb des Ringlasers erfoderliche Lichtverstärkug bewirken. In der Mitte des Blockes (3) ist in diesem Ausführungsbeispiel eine durchgehende Bohrung (11) zur Aufnahme eines Ditherantriebes vorgesehen.

Der zum Evakuieren des fertigen Ringlasers und zum Füllen mit Lasergas benötigte verschließbare Pumpanschluß (12) ist im allgemeinen mit einer der Elektroden kombiniert, im Beispiel in Fig. 1 mit der Kathode (16).

Als Lasergas kommt üblicherweise eine Helium-Neon-Gasmischung zur Anwendung, wobei sich der Neonanteil seinerseits zu etwa gleichen Teilen aus den Neon-Isotopen der Atomgewichte 20 und 22 zusammensetzt. Ausgenutzt wird der rote Übergang der Wellenlänge 632,8 nm.

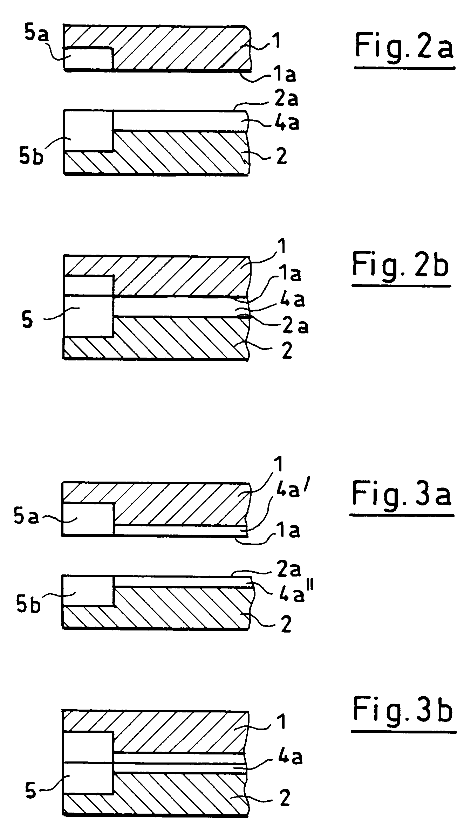

In der Schnittdarstellung der Figuren 2a, 2b und 3a, 3b wird das Herstellungsverfahren eines Resonatorblocks nach dem Sandwich-Prinzip demonstriert. Die Figuren 2a, 2b zeigen ausschnittweise einen unsymmetrisch eingeformten Entladungskanal, beispielsweise (4a), im Längsschnitt. Die Figuren 3a, 3b zeigen ebenfalls ausschnittweise einen symmetrisch eingeformten Entladungskanal im Längsschnitt. In der Darstellung der Fig. 2a ist gezeigt, wie in die Oberfläche (2a) des Teilkörpers (2) die Form eines Teilkanales (4a) und eines Teiles einer Ausnehmung (5), beispielsweise eine Gasvorratsbohrung eingearbeitet sind. Der andere Teil der Ausnehmung (5) ist in die Oberfläche (1a) des Teilkörpers (1) eingearbeitet. In dem in Fig. 3a skizzierten Ausführungsbeispiel sind in die Oberflächen (1a) und (2a) der Teilkörper (1) und (2) jeweils die entlang der Längsachse geteilten Hälften des Teilkanales (4a) und der Ausnehmung (5) eingearbeitet. Die Teilkörper (1) und (2) werden, wie in den Fig. 2b und 3b dargestellt, jeweils positionsgerecht übereinandergelegt und vakuumdicht miteinander verbunden, so daß sich die eingeformten Strukturen zu einer Einheit ergänzen.

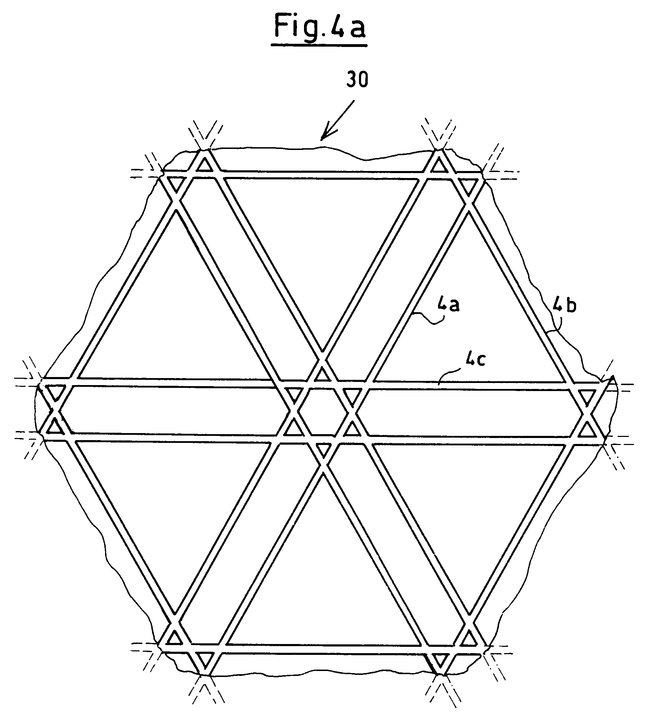

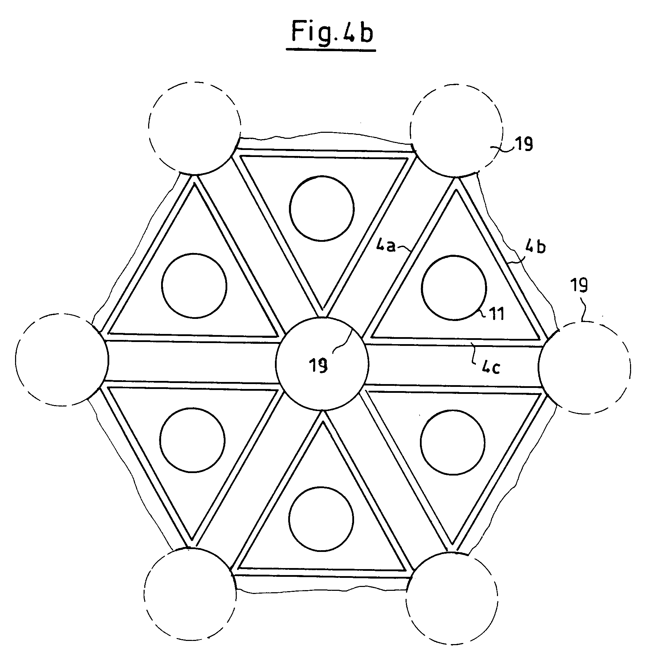

In den Figuren 4a bis 4e ist grundsätzlich dargestellt, wie aus zwei Platten eine größere Anzahl von Resonatorblöcken herzustellen ist, die in ihrer Anlage dem in Fig. 1 gezeigten Ausführungsbeispiel im Prinzip entsprechen, wobei Teilen mit gleicher Funktionsbestimmung das gleiche Bezugszeichen zugeordnet wurde. Zwei Platten (30) der halben Dicke des fertigen Resonatorblockes werden nacheinander mit den präzisen Entladungskanälen, den Bohrungen zur Aufnahme des Ditherantriebs, der Elektroden und des Gasvorrats im Spiegelbereich versehen.

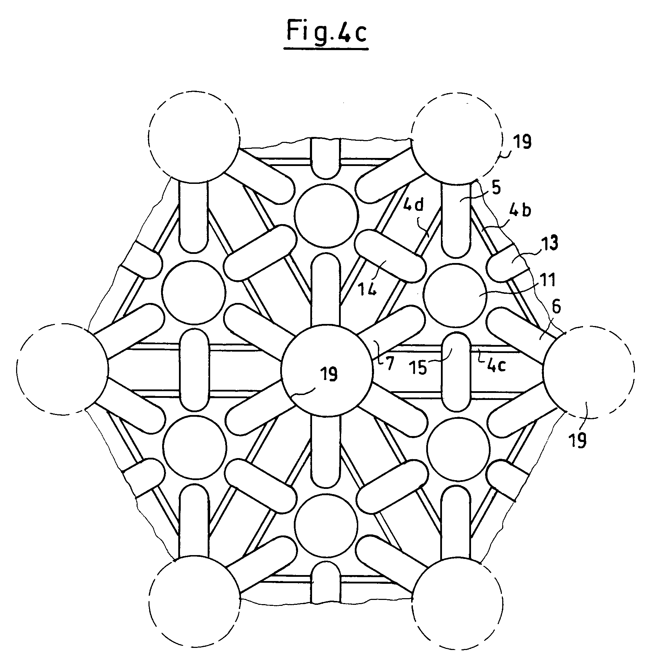

Die Anlage der Entladungskanäle (4a, 4b, 4c) geht aus der in Draufsicht gezeigten Ansicht der Figur 4a hervor, die der Ditherbohrungen (11) aus 4b, die der Elektroden- (13, 14, 15) und Gasvorratsbohrungen (5, 6, 7) im Spiegelbereich aus der Figur 4c. Der Querschnitt der Teilkanäle ist vorzugsweise rechteckig oder halbkreisförmig; das Verhältnis von Tiefe zur Breite der Kanäle beträgt vorteilhafterweise 1 : 2. Durch Bohrungen (19) im Bereich der Spiegelanlageflächen von sechs benachbarten Blöcken, kann eine gemeinsame Vorbearbeitung vorgenommen werden, d.h. nicht benötigtes Material läßt sich effektiv mit Hilfe eines Hohlbohrers entfernen.

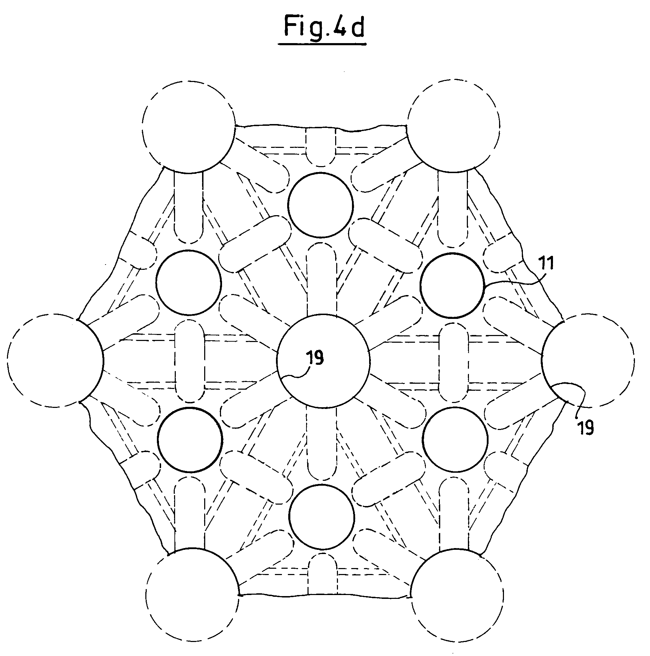

Im nächsten Verfahrensschritt werden, wie in Fig. 4d dargestellt, zwei identische, jeweils die Struktur einer Vielzahl von Resonatorblöcken aufweisende Platten übereinandergelegt und so positioniert, daß sich die Hälften der Entladungskanäle und der anderen Ausnehmungen ergänzen. Durch einen geeigneten, dem Blockmaterial angepaßten Verbindungsprozeß wie Löten, Verschmelzen, Schweißen, vorzugsweise in einem Durchlaufofen, entsteht ein Array noch zusammenhängender Resonatorblockrohlinge.

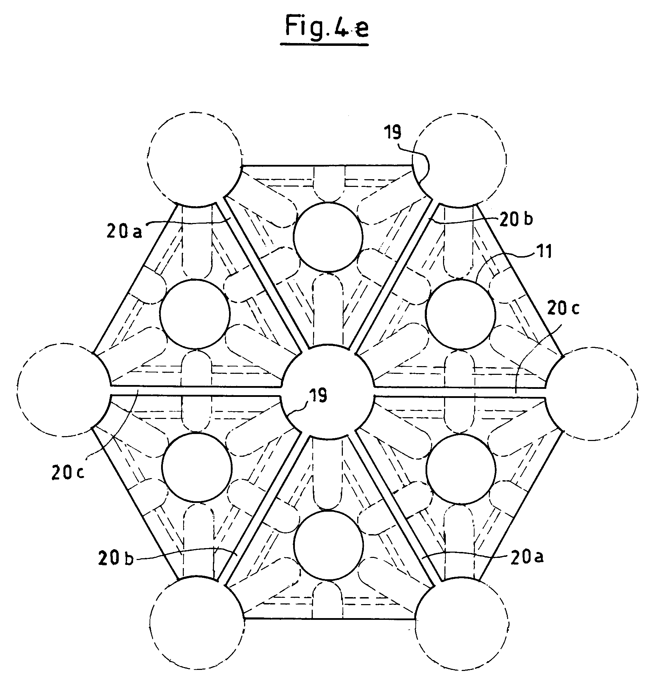

Im darauf folgenden, in Fig. 4e dargestellten Verfahrensschritt werden die Resonatorblockrohlinge mit einem geeigneten Werkzeug entlang der Linien 20a, 20b, 20c separiert. Ausgehend von den späteren Verbindungsflächen ist eine problemlose spanabhebende Bearbeitung der Entladungskanäle und der Gasvorratsräume mit dem Blockmaterial angepaßten Schleif- und Fräswerkzeugen möglich, die insbesondere dann zu Einsparungen führt, wenn jeweils eine größere Anzahl von Resonatorblöcken schematisch in einem Arbeitsgang gefertigt wird.

Die Endbearbeitung der Anlageflächen für die Laserspiegel (8, 9, 10) erfolgt zweckmäßig gemeinsam an einer größeren Zahl von Blöcken, die z.B. auf einem Dorn aufgefädelt werden. Bei einer bevorzugten alternativen Vorgehensweise wird die Endbearbeitung der Spiegelanlageflächen vor dem Separieren vorgenommen, wobei sich wegen der Größe des Blockarrays eine hohe Ausrichtgenauigkeit, die sich auf alle Einzelblöcke überträgt, ergibt.

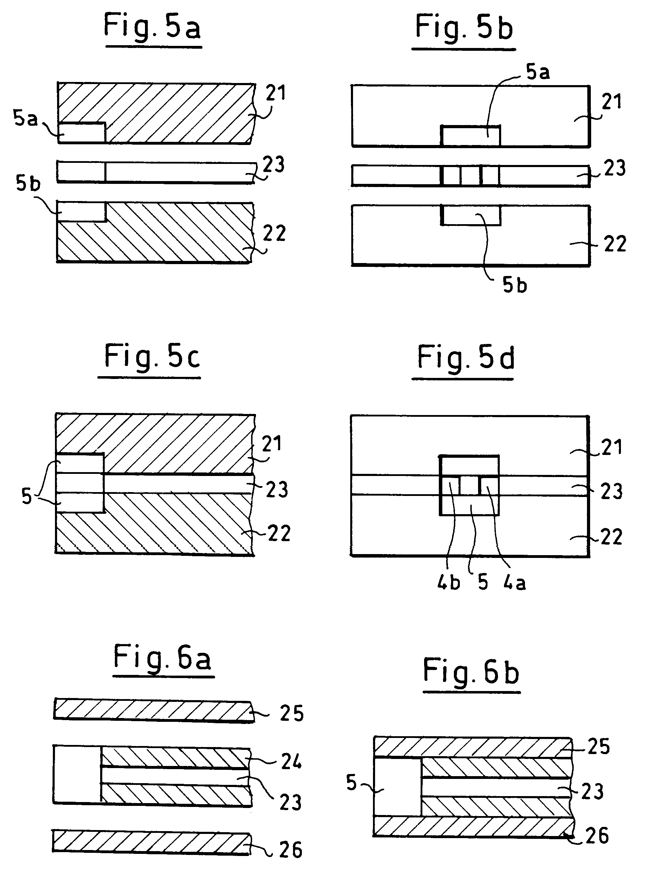

In den Darstellungen der Fig. 5a - 5d ist ein Ausführungsbeispiel für die Herstellung eines Laserkreisel-Resonatorblockes aus drei Teilkörpern demonstriert. Aus der Fig. 5a ist im Längsschnitt die Zusammensetzung des Laserkreisel-Resonatorblockes aus den Deckplatten (21) und (22) und dem Kanal (23) ersichtlich. Der Kanal (23) kann durch parallele, geeignet geformte und positionierte Abstandsstücke realisiert sein. Eine Ausnehmung (5), beispielsweise für einen Gasvorratsraum, befindet sich je teilweise (5a, 5b) in den Deckplatten (21) und (22). Die Fig. 5c zeigt die zu einer Einheit verbundenen Einzelteile. Die Fig. 5b und 5d zeigen den in 5a und 5c dargestellten Sachverhalt im Querschnitt entlang der Fig. 1 gezeichneten Schnittlinie II - II. In den Fig. 6a und 6b ist demonstriert, daß Resonatorblöcke auch dadurch hergestellt werden können, daß die Kanäle (23) durch Bohren aus einem Materialblock (24) erzeugt werden und dieser ausgebohrte Materialblock (24) durch glatte Deckplatten (25), (26), die die Außenwände des Gasreservoirs (5) bilden, vervollständigt wird.

Bei dem Herstellungsverfahren ist zu berücksichtigen, daß alle spanabhebend bearbeiteten Innenflächen und Verbindungsflächen vor dem Aufbringen der Spiegel usw. geätzt werden müssen, um Mikrorisse zu entfernen. Eine deutliche Kostenersparnis ist erzielbar, wenn alle Kanäle und Vorratsbohrungen im Preßverfahren oder im Gießverfahren eingebracht werden, so daß eine Nachbearbeitung entfällt. Lediglich die Erzeugung der ebenen Verbindungsflächen erfordert gegebenenfalls ein großflächiges Überarbeiten.

Die mit dem erfindungsgemäßen Verfahren erzielbaren Vorteile liegen zum einen in der rationellen Fertigung einer großen Zahl von Einzelblöcken und zum anderen darin, daß bei der zunächst offenen Zugänglichkeit des Blockinneren Bearbeitungs- und Formgebungsverfahren zur Anwendung kommen können, die sich hinsichtlich Präzision und/oder Effizienz durch eine hohe Leistungsfähigkeit auszeichnen. Die Möglichkeit, das Blockinnere weitestgehend freizuräumen und als Gasvorratsvolumen zu nutzen, wirkt sich insbesondere bei extrem kleinen kostengünstigen Laserkreiseln mit Strahldreieck-Kantenlängen von ca. 2 cm vorteilhaft auf die erreichbare Betriebs- und Laserlebensdauer aus.

Es liegt auf der Hand, daß das Sandwich-Verfahren problemlos auf andere Resonatorkonfigurationen übertragbar ist, z.B. auf gleichschenklige Dreiecke und Vierecke wie Quadrate, Rechtecke und Rhomben. Fig. 1 und Fig. 2 schränken nicht die möglichen Kanalanordnungen und -abmessungen und die Anordnung der Hilfsmittel ein. So können z.B. alle drei Elektrodenzuführungen im Bereich einer Dreiecksseite (z.B. (4b)) angeordnet sein und die Kanäle (4a, 4c) einen deutlich größeren Querschnitt aufweisen, um als Gasreservoir zu dienen.

**Patentansprüche**

1. Verfahren zur Herstellung von aus zwei oder mehr Teilkörpern (1, 2) (21, 22, 23), (24, 25, 26) zusammengesetzten Laserkreisel-Resonatorblöcken (3n), in denen zwei gegenläufig in einem geschlossenen Kreislauf rotierende Laserstrahlen zur Messung von Winkelgeschwindigkeiten benutzt werden, wobei der Weg des Laserlichtes in den Resonatorblock (3) als mehrteiliger Kanal (4a, 4b, 4c) von mehreckigem, vorzugsweise dreieckigem Grundriß mit in den Ecken (5, 6, 7) angeordneten Resonatorspiegeln (8, 9, 10) so in die Oberflächen (1a, 2a) der Teilkörper (1, 2) eingeformt ist, daß die Teilkanäle (4a, 4b, 4c) entlang ihrer Längsachse geteilt sind und sich beim Verbinden der Teilkörper zu geschlossenen Tunnels ergänzen, daß in zwei oder mehr Platten (30) von vielfacher Ausdehnung eines Resonatorblocks jeweils die sich gegenseitig ergänzenden Kanalstrukturen einer Vielzahl von Resonatorblöcken eingearbeitet werden, daß die so bearbeiteten Platten übereinandergelegt, entsprechend den Kanalstrukturen positioniert, miteinander vakuumdicht verbunden und anschließend in einzelne Resonatorblöcke separiert werden.

2. Verfahren nach Anspruch 1, dadurch gekennzeichnet, daß in den Resonatorblock zusätzlich Ausnehmungen für ein Lasergasreservoir (13) und für Hilfsmittel, wie Elektrodenzuführungen (14, 15) und Ditherantrieb (11), eingeformt werden.

3. Verfahren nach Anspruch 2, dadurch gekennzeichnet, daß die Ausnehmungen für die Kanäle und Hilfsmittel symmetrisch zu ihrer Längsachse in zwei Platten (1, 2) eingeformt werden.

4. Verfahren nach Anspruch 2, dadurch gekennzeichnet, daß die Ausnehmungen für die Kanäle und Hilfsmittel unsymmetrisch zu ihrer Längsachse in zwei Platten (1, 2) eingeformt werden.

5. Verfahren nach Anspruch 2, dadurch gekennzeichnet, daß die Kanäle (23) durch parallele, geeignet positionierte einzelne Plattenelemente und zwei Deckplatten (21, 22) geformt werden, in die weitere Ausnehmungen (5a, 5b) als Hilfsmittel eingebracht sind.

6. Verfahren nach Anspruch 2, dadurch gekennzeichnet, daß die Kanäle (23) in die mittleren Teile einer dreilagigen Anordnung (24, 25, 26) vor der Verbindung mit den Deckplatten (25, 26) durch Bohren eingebracht werden.

7. Verfahren nach Anspruch 5, dadurch gekennzeichnet, daß es auf einzelne Laserkreisel-Resonatorblöcke angewandt wird.

8. Verfahren nach Anspruch 6, dadurch gekennzeichnet, daß es auf einzelne Laserkreisel-Resonatorblöcke angewandt wird.

9. Verfahren nach Anspruch 2, dadurch gekennzeichnet, daß die Ausnehmungen mittels Schleif- und Fräswerkzeugen in die Platten eingeformt werden.

10. Verfahren nach Anspruch 2, dadurch gekennzeichnet, daß die Ausnehmungen in die Platten eingepreßt werden.

11. Verfahren nach Anspruch 2, dadurch gekennzeichnet, daß die Platten (30, 1, 2, 21, 22, 25, 26) preßtechnisch hergestellt werden.

12. Verfahren nach Anspruch 2, dadurch gekennzeichnet, daß die Platten (30, 1, 2, 21, 22, 25, 26) gießtechnisch hergestellt werden.

13. Verfahren nach Anspruch 2, dadurch gekennzeichnet, daß die Platten und Teilkörper (30, 1, 2, 21, 22, 24, 25, 26) aus einem dielektrischen Material, wie Glaskeramik, Glas oder Keramik hergestellt werden.

14. Verfahren nach Anspruch 5 oder 6, dadurch gekennzeichnet, daß die Deckplatten (21, 22) aus einem bezüglich des thermischen Ausdehnungskoeffizienten an die mittleren Blockelemente (23, 24) angepaßten Metall bestehen.

# Fig.1

Fig. 2a

Fig. 2b

Fig. 3a

Fig. 3b

# Fig.4a

# Fig. 4b

# Fig.4c

## Fig. 4 e

# Fig.4d

## Fig. 5a

## Fig. 5b

## Fig. 5c

## Fig. 5d

## Fig. 6a

## Fig. 6b